# EUROPEAN PATENT APPLICATION

(11) **EP 3 572 954 A1**
(43) Date of publication of application: **27.11.2019**
(21) Application number: 17895562.1
(22) Date of filing: 21.10.2017
(51) Int. Cl.: G06F 17/30

(54) **BROWSER PAGE DISPLAY METHOD AND DEVICE, STORAGE MEDIUM, AND TERMINAL**

(30) Priority: 13.02.2017 CN 201710076603
(71) Applicant: GUANGDONG OPPO MOBILE TELECOMMUNICATIONS CORP., LTD., Wusha, Chang'an Dongguan, Guangdong 523860 (CN)
(72) Inventor: ZENG, Jiang, Dongguan Guangdong 523860 (CN)
(74) Representative: Manitz Finsterwald Patent- und Rechtsanwaltspartnerschaft mbB
(86) International application number: PCT/CN2017/107190
(87) International publication number: WO 2018/145485

(57) **Abstract**

A browser page display method, apparatus and terminal are provided. The browser page display method includes that: a trigger instruction of a page setup event is acquired, and a webpage address of a webpage corresponding to the page setup event is acquired (S101); a tab page corresponding to the page setup event is closed, wherein the tab page is displayed in a browser window (S102); and parameters of a preset window and the browser window are set in a preset mode, and page content corresponding to the webpage address is displayed in the preset window (S103), such that display content of the preset window and display content of the browser window are displayed together on a display screen.

## Description

The present application claims priority to Chinese Patent Application No. 201710076603.3, filed to the China Patent Office on February 13, 2017, entitled "Browser Page Display Method, Apparatus and Terminal", the contents of which are hereby incorporated by reference in its entirety.

### Technical Field

The embodiments of the present application relate to a computer technology, and in particular, to a browser page display method and apparatus, a storage medium and a terminal.

### Background

A browser is one of necessary software for a computer and a mobile terminal, and can display content in a webpage terminal or a file system. A user can perform an interactive operation on a browser page according to the displayed content.

More and more users watch news and videos, or search for information, etc, through browsers. When a user uses a browser, multiple tabs are usually opened at the same time, and content displayed in different tabs are required to meet the user's needs.

The current browser tab management mode is flawed and needs improvement.

### Summary

The present application provides a browser page display method and apparatus, a storage medium and a terminal, which may reduce the resource consumption of a system and improve the running speed and efficiency of the system.

According to a first aspect, the embodiments of the present application provide a browser page display method, which may include the operations as follows.

A trigger instruction of a page setup event is acquired, and a webpage address of a webpage corresponding to the page setup event is acquired.

A tab page corresponding to the page setup event is closed, wherein the tab page is displayed in a browser window.

Parameters of a preset window and the browser window are set in a preset mode, and page content corresponding to the webpage address is displayed in the preset window, such that display content of the preset window and display content of the browser window are displayed together on a display screen.

According to a second aspect, the embodiments of the present application further provide a browser page display apparatus, which may include:
a webpage address acquiring module, configured to acquire a trigger instruction of a page setup event, and acquire a webpage address of a webpage corresponding to the page setup event;
a tab page closing module, configured to close a tab page corresponding to the page setup event, wherein the tab page is displayed in a browser window; and
a preset window setting module, configured to set parameters of a preset window and the browser window in a preset mode, and display page content corresponding to the webpage address in the preset window, such that display content of the preset window and display content of the browser window are displayed together on a display screen.

According to a third aspect, the embodiments of the present application further provide a browser page display terminal, which may include: a processor, a memory and a computer program that is stored on the memory and runnable on the processor, wherein the computer program is executed by the processor to implement the operations as follows.

A trigger instruction of a page setup event is acquired, and a webpage address of a webpage corresponding to the page setup event is acquired.

A tab page corresponding to the page setup event is closed, wherein the tab page is displayed in a browser window.

Parameters of a preset window and the browser window are set in a preset mode, and page content corresponding to the webpage address is displayed in the preset window, such that display content of the preset window and display content of the browser window are displayed together on a display screen.

### Brief Description of the Drawings

In order to describe the technical solutions in the embodiments of the present application more clearly, the drawings referenced in descriptions about the embodiments will be simply introduced below. Obviously, the drawings in the following descriptions are only some embodiments of the present application. Those skilled in the art may further obtain other drawings according to these drawings without creative work.
Fig. 1A is a flowchart of a browser page display method according to an embodiment of the present application;
Fig. 1B is a schematic diagram of a display interface according to an embodiment of the present application;
Fig. 2A is a flowchart of another browser page display method according to an embodiment of the present application;
Fig. 2B is a schematic diagram of another display interface according to an embodiment of the present application;
Fig. 3 is a flowchart of another browser page display method according to an embodiment of the present application;
Fig. 4A is a flowchart of another browser page display method according to an embodiment of the present application;
Fig. 4B is a schematic diagram of another display interface according to an embodiment of the present application;
Fig. 5 is a flowchart of another browser page display method according to an embodiment of the present application;
Fig. 6 is a block diagram of a browser page display apparatus according to an embodiment of the present application; and
Fig. 7 is a schematic structural diagram of a browser page display terminal according to an embodiment of the present application.

### Detailed Description of the Embodiments

The present application will be further described in detail below with reference to the accompanying drawings and embodiments. It will be appreciated that the specific embodiments described herein are merely illustrative of the present application and are not intended to limit the present application. In addition, it is also to be noted that, for the convenience of description, only some but not all of the structures related to the present application are shown in the drawings.

The embodiments of the present application provide a browser page display method, which includes the operations as follows.

A trigger instruction of a page setup event is acquired, and a webpage address of a webpage corresponding to the page setup event is acquired.

A tab page corresponding to the page setup event is closed, wherein the tab page is displayed in a browser window.

Parameters of a preset window and the browser window are set in a preset mode, and page content corresponding to the webpage address is displayed in the preset window, such that display content of the preset window and display content of the browser window are displayed together on a display screen.

In an embodiment, before setting the parameters of the preset window and the browser window in the preset mode, the browser page display method further includes the operation as follows.

A preset window is popped up in response to a failure in detecting any opened preset window.

In an embodiment, the operation of setting the parameters of the preset window and the browser window in the preset mode includes the operations as follows.

A display width value of the display screen is acquired, and width values of the preset window and the browser window are set to be half of the display width value.

The preset window and the browser window are displayed side by side horizontally.

In an embodiment, before setting the parameters of the preset window and the browser window in the preset mode, the browser page display method further includes the operation as follows.

A new preset window is popped up in response to detecting at least one opened preset window and a number of the at least one opened preset window is less than a preset number.

In an embodiment, the operation of displaying the page content corresponding to the webpage address in the preset window includes the operation as follows.

In response to detecting opened preset windows and a number of the opened preset windows is equal to a preset number, page content corresponding to the webpage address is displayed in at least one of the opened preset windows.

In an embodiment, the operation of setting the parameters of the preset window and the browser window in the preset mode includes the operations as follows.

A size and a position of the preset window are set according to a preset distance value from a border of the preset window to a border of the display screen.

A size and a position of the browser window are set according to a preset distance value from a border of the browser window to a border of the display screen.

In an embodiment, the operation of closing the tab page corresponding to the page setup event includes the operation as follows.

A tab page window processing function triggered by the trigger instruction of the page setup event is determined, a tab page closing instruction is generated according to the tab page window processing function, and a process of the tab page corresponding to the page setup event is closed according to the tab page closing instruction.

In an embodiment, a trigger instruction of a page recovery event is acquired, a preset window corresponding to the page recovery event is closed, and the page content displayed in the closed preset window is displayed in the browser window.

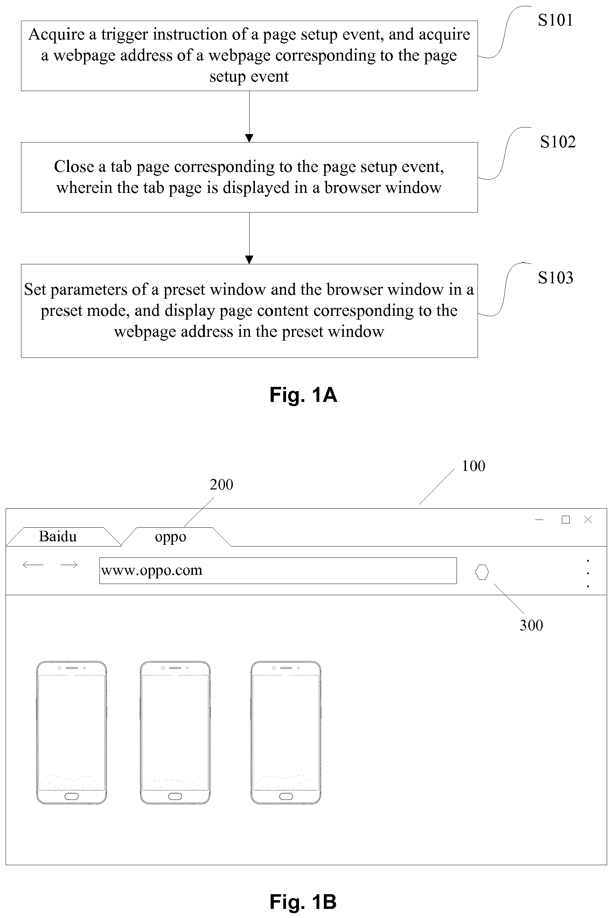

Fig. 1A is a flowchart of a browser page display method according to an embodiment of the present application. The present embodiment may be applied to a situation where a user browses a page through a browser. The browser page display method may be performed by a terminal device, such as a computer, a notebook, a mobile phone, or a tablet. As shown in Fig. 1A, an exemplary solution provided in the present embodiment is as follows:
At S101, a trigger instruction of a page setup event is acquired, and a webpage address of a webpage corresponding to the page setup event is acquired.

In an embodiment, the page setup event is an event for resetting and displaying a browser window displayed in a display screen. Acquiring the trigger instruction of the page setup event may be receiving an instruction triggered by a user when clicking a preset button. The preset button may be displayed in a menu bar of a tab page, and when a click operation of the preset button is received, the trigger instruction of the page setup event will be generated and acquired. Fig. 1B is a schematic diagram of a display interface according to an embodiment of the present application. As shown in Fig. 1B, a button 300 is disposed at the menu bar of the tab page 200 in the browser window 100.

In an embodiment, the webpage address of the webpage corresponding to the page setup event may be a webpage address of a webpage corresponding to a tab page where the button for triggering the page setup event is located. The user opens one or more tab pages through a browser, wherein the tab pages may be video webpages, search webpages, e-book webpages, etc. Correspondingly, when the user selects one of the tab pages, a preset button is displayed in the menu bar of the tab page, and when the user clicks the preset button, a web address corresponding to content displayed by the tab page will be acquired. Exemplarily, when the user opens Youku, this video website is displayed in the browser window as a current tab page displayed by the browser, and when the user clicks the preset button, a web address of the video website will be acquired.

At S102, a tab page corresponding to the page setup event is closed, wherein the tab page is displayed in a browser window.

In an embodiment, a browser window may display one or more tab pages simultaneously. After the webpage address corresponding to the page setup event is acquired in S101, correspondingly, the tab page corresponding to the webpage address, that is, the current tab page corresponding to the page setup event will be closed.

As an exemplary implementation, the operation of closing the tab page corresponding to the page setup event includes that: a tab page window processing function triggered by the trigger instruction of the page setup event is determined, a tab page closing instruction is generated according to the tab page window processing function, and a process of the tab page corresponding to the page setup event is closed according to the tab page closing instruction. When the process is destroyed and closed, the corresponding tab page will be closed.

At S103, parameters of a preset window and the browser window are set in a preset mode, and page content corresponding to the webpage address is displayed in the preset window.

In an embodiment, the preset window may be a window generated by a browser-based component program created by a browser, or may be a system window generated on the basis of an operating system, such as Microsoft, Android or IOS. The preset window may be a square window, a circular window or a window of any shape. The size of the preset window is not limited, and may be adaptively adjusted according to user requirements and system settings.

In an embodiment, the preset mode of setting the parameters of the preset window and the browser window may be: adjusting the size of the preset window and the size of the browser window according to the size of the display screen based on a fixed proportion, and arranging the preset window and the browser window in a non-overlapping form, so that display content of the preset window and display content of the browser window are displayed together on the display screen. Or, the preset window and the browser window are fixed, according to a fixed coordinate position on the display screen, at the fixed coordinate position.

In an embodiment, the operation of setting the parameters of the preset window and the browser window in the preset mode includes that: a size and a position of the preset window are set according to a preset distance value from a border of the preset window to a border of the display screen; and a size and a position of the browser window are set according to a preset distance value from a border of the browser window to a border of the display screen. The distance value from the border of the preset window to the border of the display screen includes: distance values from upper, lower, left and right borders of the preset window to upper, lower, left and right borders of the display screen respectively. Similarly, the browser window is set according to the preset distance value from the border of the browser window to the border of the display screen. The specific preset distance value may be manually set or automatically generated, and the principle of setting or generating the specific preset distance value is to display the preset window and the browser window together on the display screen.

In an embodiment, the preset window may be a frozen window, that is, the display content of the window is frozen, and the window does not have the function of adding a tab or a page; or the display content of the window is frozen, but the preset window may create a new tab page according to the operation of the user or jump to a webpage address input by the user.

In an embodiment, the preset window and the browser window are displayed together on the display screen, and the user can view and browse each window through the display screen. The mode of displaying the preset window and the browser window together on the display screen may be displaying the preset window and the browser window side by side. The arrangement may be up-down side-by-side arrangement or left-right side-by-side arrangement. As an alternative, the browser window may be displayed in the upper right corner of the screen, and the preset window may be displayed in the lower left corner of the screen. The specific display arrangement is not limited in the embodiments.

In an embodiment, when the preset window and the browser window are displayed together on the display screen, the browser window may continue to create a tab page, close a tab page, open a home page, or open a page for the user to input a webpage address. The display content in the preset window is not affected by the content displayed on the browser window page.

The present embodiment provides a browser page display method. When detecting that a page setup event is triggered, a current tab page is closed, and display content of the tab page is displayed in a preset window, so that the preset window and a browser window are displayed together on a display screen, and a user can simultaneously watch the display content in the preset window while browsing a webpage and searching for the content in the browser window, thereby avoiding the cumbersome operation caused by the user needing to switch the window multiple times, reducing the resource consumption of a system, and improving the running speed and efficiency of the system.

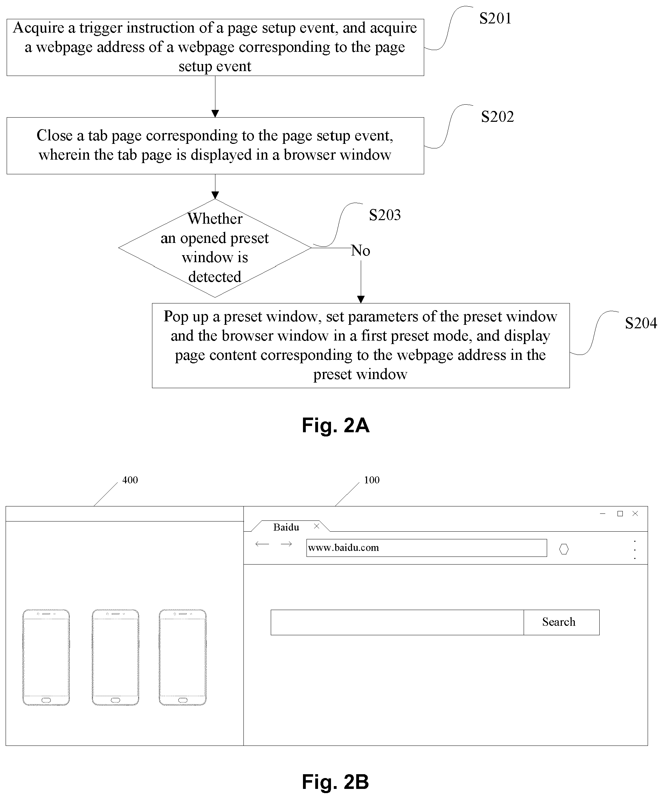

Fig. 2A is a flowchart of another browser page display method according to an embodiment of the present application. On the basis of the above embodiment, as an exemplary implementation, before the parameters of the preset window and the browser window in the preset mode are set, the browser page display method may include the operation as follows.

A preset window is popped up in response to a failure in detecting any opened preset window, and page content corresponding to the webpage address is displayed in the preset window.

Thus, the display content in a tab page of a browser can be displayed in a new window, so that it is supported to display, in the preset window, the content of the tab page needing to be frozen while the user operates the browser window.

Based on the above optimization, as shown in Fig. 2A, the technical solution provided by the present embodiment is specifically as follows:
At S201, a trigger instruction of a page setup event is acquired, and a webpage address of a webpage corresponding to the page setup event is acquired.

At S202, a tab page corresponding to the page setup event is closed, wherein the tab page is displayed in a browser window.

At S203, it is judged whether an opened preset window is detected, and S204 is performed in response to a failure in detecting any opened preset window.

The preset window may be pre-opened. If it is detected that the preset window is not opened, the preset window is opened correspondingly for display of subsequent webpage content.

At S204, a preset window is popped up, parameters of the preset window and the browser window are set in a first preset mode, and page content corresponding to the webpage address is displayed in the preset window.

The first preset mode is a mode of setting parameters of the preset window and the browser window after popping up the preset window in response to the failure in detecting any opened preset window.

In an embodiment, a preset window is popped up in response to a failure in detecting any opened preset window, such that the preset window and the browser window are displayed together on the display screen. Exemplarily, as shown in Fig. 2B, which is a schematic diagram of another display interface according to an embodiment of the present application, a preset window 400 and a browser window 100 are displayed side by side horizontally. When a page setup event is triggered in S201, after a webpage address corresponding to the page setup event is acquired, page content corresponding to the webpage address is displayed in the preset window 400.

Specifically, the embodiment can be implemented by the following code:

```
    //temporarily store the webpage address of the webpage corresponding to the
 page setup event acquired in S201, which can be used for recovering the display
 content of a subsequent preset window or can be used as a display basis of the
 display content of a corresponding preset window after multiple page setup events are
 triggered
    varcurrent_url;
    //set the parameters of the popped-up preset window
    varwidth; //define a width value of the preset window as width
    chrome.windows.getCurrent(function(win)){
    win.left=win.width/2;
    win.width=win.width/2;
    width =win.width/2;
    })//set the width value of the popped-up preset window to be half of a width value
 of a current display screen and also set the display width value of the browser window
 to be half of the width value of a current display screen, where the left border of the
 browser is located at a half position of the display screen
    //acquire a webpage address of a webpage corresponding to a current page
 setup event
    chrome.tabs.getSelected(null, function(tab)){
    Current_url=tab.url;
    })
    varnew_winid=1011; //set a preset window and set an ID to be 1011
    if(chrome.windows.get(new_winid)){
    //if a window has existed, update the display content of the window
    chrome.windows.update(new_winid,{
    url:current_url
    },function(){});
    }else{
    //pop up a preset window which is displayed in the display screen according to
 preset parameters
    chrome.windows.create({
    windowId:1011,
    url:current_url,
    left:0,//align a left border of the preset window with a left side of the display
 screen
    top:0,//align an upper border of the preset window with an upper side of the
 display screen
    width :width,
    type:'popup'//open the preset window in a popup mode
    },fuction(){});
    }
```

In an embodiment, the preset window and the browser window respectively occupy half of the display screen and are displayed side by side horizontally or vertically, and may alternatively be displayed diagonally. The present embodiment does not limit the arrangement modes of displaying the display content of the preset window and the browser window, and any arrangement mode that supports displaying the display content of the preset window and the browser window simultaneously on the display screen falls within the implementation range of the present embodiment.

The present embodiment provides a browser page display method. When detecting that a page setup event is triggered, a preset window is popped up, and webpage content corresponding to the page setup event is displayed, so that a user can simultaneously watch the display content in the preset window while browsing a webpage and searching for the content in the browser window, thereby avoiding the cumbersome operation caused by the user needing to switch the window multiple times, reducing the resource consumption of a system, and improving the running speed and efficiency of the system.

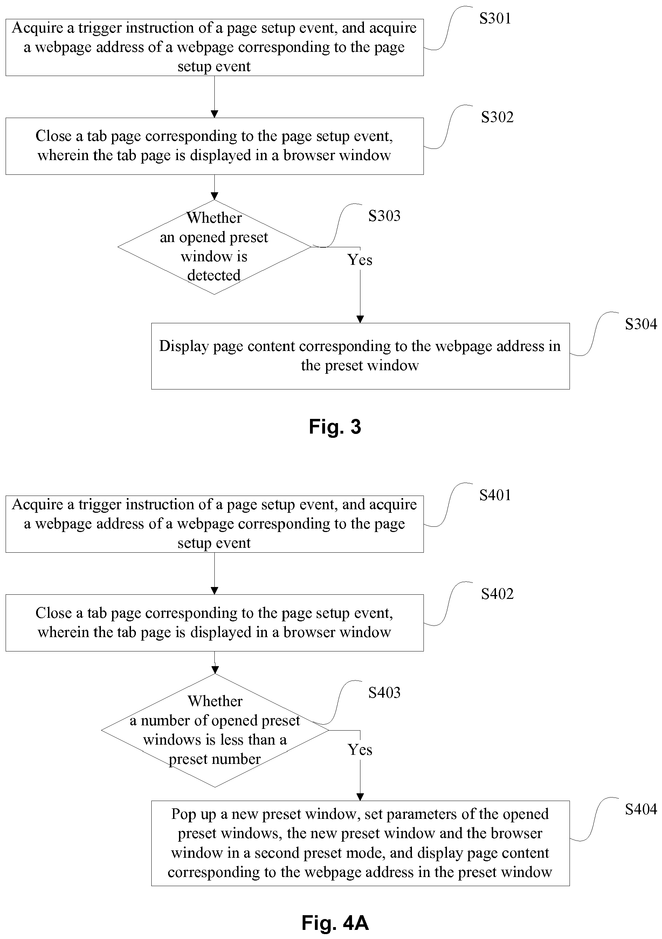

Fig. 3 is a flowchart of another browser page display method according to an embodiment of the present application. On the basis of the above embodiment, as an exemplary implementation, before setting the parameters of the preset window and the browser window in the preset mode, the browser page display method further includes the operation as follows.

If an opened preset window is detected, page content corresponding to the webpage address is displayed in the preset window.

Thus, when the user needs to lock and freeze a tab page in a certain browser, content displayed by the tab page may be directly refreshed and displayed in the opened preset window.

Based on the above optimization, as shown in Fig. 3, the technical solution provided by the present embodiment is specifically as follows:
At S301, a trigger instruction of a page setup event is acquired, and a webpage address of a webpage corresponding to the page setup event is acquired.

At S302, a tab page corresponding to the page setup event is closed, wherein the tab page is displayed in a browser window.

At S303, it is judged whether an opened preset window is detected, and S304 is performed in response to detecting an opened preset window.

At S304, page content corresponding to the webpage address is displayed in the preset window.

Exemplarily, it is assumed that a user opens a Baidu tab page and a Youku video tab page in the browser window, the page content of the Youku video tab page is displayed as a current tab page of the browser window, and the preset window displays an iQiyi video tab page. In this situation, after the user clicks a preset button in the Youku video tab page, the content of the Youku video tab page will be displayed in the preset window, and an original iQiyi tab page in the preset window will be automatically closed. Meanwhile, the page content corresponding to the Baidu tab page is displayed in the browser window. As an exemplary implementation, when the content of the iQiyi video tab page is overwritten by the content of the Youku video tab page, a tab corresponding to the iQiyi video tab page may be transferred to a tab bar of the browser window for the user to select again.

The present embodiment provides a browser page display method. When detecting that a page setup event is triggered, content of a closed tab page corresponding to the page setup event is refreshed and displayed in a popped-up preset window, so that a user can display the required tab page content in the preset window while browsing a webpage and searching for the content in the browser window, thereby avoiding the cumbersome operation caused by the user needing to switch the window multiple times, reducing the resource consumption of a system, and improving the running speed and efficiency of the system.

Fig. 4A is a flowchart of another browser page display method according to an embodiment of the present application. On the basis of the above embodiment, as an exemplary implementation, before setting the parameters of the preset window and the browser window in the preset mode, the browser page display method includes the operation as follows.

A new preset window is popped up in response to detecting at least one opened preset window and a number of the at least one opened preset window is less than a preset number.

The operation of setting the parameters of the preset window and the browser window in the preset mode includes the operations as follows.

Parameters of the opened preset windows, the new preset window and the browser window are set in a second preset mode.

Thus, multiple preset windows may be simultaneously displayed in the display screen, and the user can simultaneously browse the content of the multiple preset windows through the display screen.

Based on the above optimization, as shown in Fig. 4A, the technical solution provided by the present embodiment is specifically as follows:
At S401, a trigger instruction of a page setup event is acquired, and a webpage address of a webpage corresponding to the page setup event is acquired.

At S402, a tab page corresponding to the page setup event is closed, wherein the tab page is displayed in a browser window.

At S403, it is judged whether a number of opened preset windows is less than a preset number, and if so, S404 is performed.

At S404, a new preset window is popped up, parameters of the opened preset windows, the new preset window and the browser window are set in a second preset mode, and page content corresponding to the webpage address is displayed in the preset window.

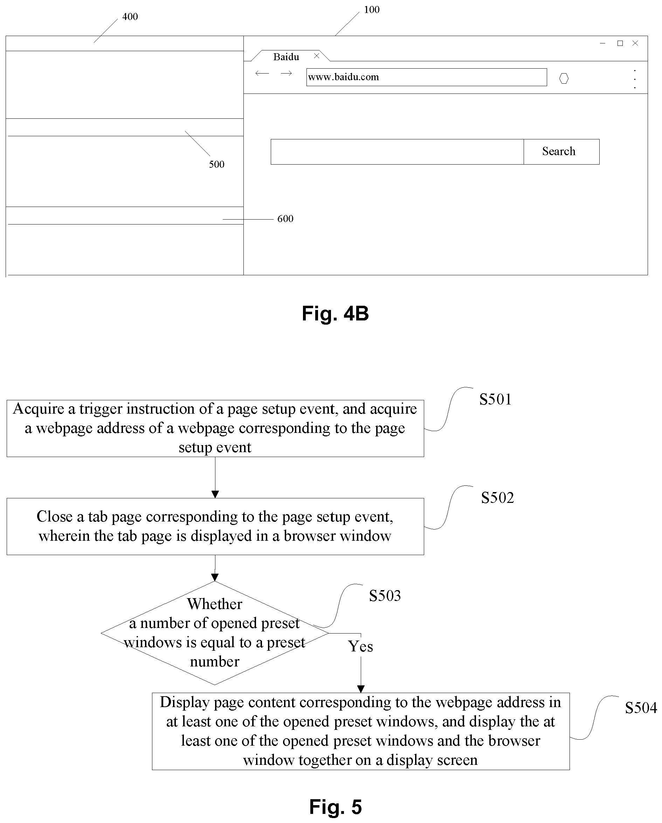

In an embodiment, when a screen display interface is large, for example, when the screen size of the computer is large, multiple preset windows may be simultaneously displayed in the screen. Fig. 4B is a schematic diagram of another display interface according to an embodiment of the present application. As shown in Fig. 4B, a browser window 100, a preset window 400, a preset window 500, and a preset window 600 are displayed together on a display screen. A preset number of the preset windows may be adaptively adjusted according to the size of the screen. As an exemplary implementation, the preset number of the preset windows may be 4, 5, 8, or 10.

In an embodiment, the second preset mode of setting parameters of multiple preset windows and the browser window may be: arranging multiple preset windows on the left half of the screen with heights equally divided, and arranging the browser window at the right half of the screen, which occupies half of the display screen; or displaying the preset windows and the browser window on the display screen based on four equally-divided grids, eight equally-divided grids or the like.

The present embodiment provides a browser page display method. A user can freeze multiple tab pages in a preset window by clicking a preset button in a browser window to trigger an instruction of window freezing, thereby avoiding the cumbersome operation caused by the user needing to switch the window multiple times, reducing the resource consumption of a system, and improving the running speed and efficiency of the system.

Fig. 5 is a flowchart of another browser page display method according to an embodiment of the present application. On the basis of the above embodiment, as an exemplary implementation, the operation of displaying the page content corresponding to the webpage address in the preset window includes the operation as follows.

In response to detecting opened preset windows and a number of the opened preset windows is equal to a preset number, page content corresponding to the webpage address is displayed in at least one of the opened preset windows.

Based on the above optimization, as shown in Fig. 5, the technical solution provided by the present embodiment is specifically as follows:
At S501, a trigger instruction of a page setup event is acquired, and a webpage address of a webpage corresponding to the page setup event is acquired.

At S502, a tab page corresponding to the page setup event is closed, wherein the tab page is displayed in a browser window.

At S503, it is judged whether a number of opened preset windows is equal to a preset number, and if so, S504 is performed.

At 504, page content corresponding to the webpage address is displayed in at least one of the opened preset windows, such that the at least one of the opened preset windows and the browser window are displayed together on a display screen.

In an embodiment, when the number of opened preset windows reaches a preset number, tab pages that the user needs to freeze will be displayed in any one or more of the opened preset windows. As an exemplary implementation, the tab pages may be overwritten and replaced according to the order of the tab page display content of the preset window. For example, the display content in the preset window opened first is replaced by the display content of a tab page newly added. The preset number may be set or adaptively adjusted according to the size of the opened preset window, the size of the browser window and the size of the screen. As an exemplary implementation, the preset number may be 4, 5, 8, or 10.

The present embodiment provides a browser page display method. Multiple preset windows and a browser window may be displayed simultaneously. When a user freezes a tab page in the browser window, the frozen tab page may be displayed in one of the multiple preset windows, so that the user is convenient for comparative browsing while keeping the clear arrangement of the content of a display interface, thereby avoiding the cumbersome operation caused by the user needing to switch the window multiple times, reducing the resource consumption of a system, and improving the running speed and efficiency of the system.

On the basis of the above embodiment, when detecting that a page recovery event is triggered, a preset window corresponding to the page recovery event is closed, and the page content displayed in the closed preset window is displayed in the browser window. Exemplarily, when the user closes the preset window or clicks a recovery button in the preset window, the page recovery event will be triggered, and a tab page in the closed preset window will be added to the browser window again for the user to select and browse.

The embodiments of the present application provide a browser page display apparatus, which includes a webpage address acquiring module, a tab page closing module and a preset window setting module.

The webpage address acquiring module is configured to acquire a trigger instruction of a page setup event, and acquire a webpage address of a webpage corresponding to the page setup event.

The tab page closing module is configured to close a tab page corresponding to the page setup event, wherein the tab page is displayed in a browser window.

The preset window setting module is configured to set parameters of a preset window and the browser window in a preset mode, and display page content corresponding to the webpage address in the preset window, such that display content of the preset window and display content of the browser window are displayed together on a display screen.

In an embodiment, the preset window setting module is further configured to:
pop up, in response to a failure in detecting any opened preset window, a preset window.

In an embodiment, the preset window setting module is specifically configured to:
acquire a display width value of the display screen, and set the widths of the preset window and the browser window to be half of the display width value; and
display the preset window and the browser window side by side horizontally.

In an embodiment, the preset window setting module is further configured to:
pop up, in response to detecting at least one opened preset window and a number of the at least one opened preset window is less than a preset number, a new preset window.

In an embodiment, the preset window setting module is specifically configured to:
set a size and a position of the preset window according to a preset distance value from a border of the preset window to a border of the display screen; and
set a size and a position of the browser window according to a preset distance value from a border of the browser window to a border of the display screen.

In an embodiment, the tab page closing module is specifically configured to:
determine a tab page window processing function triggered by the trigger instruction of the page setup event, generate a tab page closing instruction according to the tab page window processing function, and close a process of the tab page corresponding to the page setup event according to the tab page closing instruction.

In an embodiment, the preset window setting module is further configured to acquire a trigger instruction of a page recovery event, close a preset window corresponding to the page recovery event, and display, in the browser window, the page content displayed in the closed preset window.

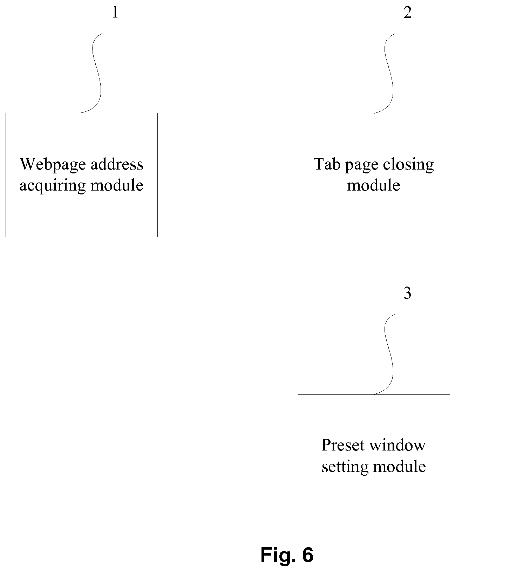

Fig. 6 is a block diagram of a browser page display apparatus according to an embodiment of the present application. The browser page display apparatus is configured to execute the browser page display method provided by the above embodiment, and has function modules and beneficial effects corresponding to the executed method. As shown in Fig. 6, the browser page display apparatus includes a webpage address acquiring module 1, a tab page closing module 2 and a preset window setting module 3.

The webpage address acquiring module 1 is configured to acquire a trigger instruction of a page setup event, and acquire a webpage address of a webpage corresponding to the page setup event.

The tab page closing module 2 is configured to close a tab page corresponding to the page setup event, wherein the tab page is displayed in a browser window.

The preset window setting module 3 is configured to set parameters of a preset window and the browser window in a preset mode, and display page content corresponding to the webpage address in the preset window, such that display content of the preset window and display content of the browser window are displayed together on a display screen.

The present embodiment provides a browser page display apparatus. When detecting that a page setup event is triggered, a current tab page is closed, parameters of a preset window and a browser window are adjusted in a preset mode, and display content of the tab page is displayed in the preset window, so that the preset window and the browser window are displayed together on a display screen, and a user can simultaneously watch the display content in the preset window while browsing a webpage and searching for the content in the browser window, thereby avoiding the cumbersome operation caused by the user needing to switch the window multiple times, reducing the resource consumption of a system, and improving the running speed and efficiency of the system.

In an embodiment, on the basis of the above technical solution, the preset window setting module 3 is further configured to:
pop up, in response to a failure in detecting any opened preset window, a preset window.

On the basis of the above technical solution, the preset window setting module 3 is specifically configured to:
acquire a display width value of the display screen, and set the widths of the preset window and the browser window to be half of the display width value; and
display the preset window and the browser window side by side horizontally.

In an embodiment, on the basis of the above technical solution, the preset window setting module 3 is further configured to:
pop up, in response to detecting at least one opened preset window and a number of the at least one opened preset window is less than a preset number, a new preset window.

In an embodiment, on the basis of the above technical solution, the preset window setting module 3 is specifically configured to:
display, In response to detecting opened preset windows and a number of the opened preset windows is equal to a preset number, page content corresponding to the webpage address in at least one of the opened preset windows.

In an embodiment, on the basis of the above technical solution, the preset window setting module 3 is specifically configured to:
set a size and a position of the preset window according to a preset distance value from a border of the preset window to a border of the display screen; and
set a size and a position of the browser window according to a preset distance value from a border of the browser window to a border of the display screen.

In an embodiment, on the basis of the above technical solution, the tab page closing module 2 is specifically configured to:
determine a tab page window processing function triggered by the trigger instruction of the page setup event, generate a tab page closing instruction according to the tab page window processing function, and close a process of the tab page corresponding to the page setup event according to the tab page closing instruction.

In an embodiment, on the basis of the above technical solution, the preset window setting module 3 is further configured to acquire a trigger instruction of a page recovery event, close a preset window corresponding to the page recovery event, and display, in the browser window, the page content displayed in the closed preset window.

The embodiments of the present application further provide a browser page display terminal, which includes: a processor, a memory and a computer program that is stored on the memory and runnable on the processor, wherein the computer program is executed by the processor to implement the browser page display method provided by any one of the embodiments of the present application. For example, the following operations are implemented.

A trigger instruction of a page setup event is acquired, and a webpage address of a webpage corresponding to the page setup event is acquired.

A tab page corresponding to the page setup event is closed, wherein the tab page is displayed in a browser window.

Parameters of a preset window and the browser window are set in a preset mode, and page content corresponding to the webpage address is displayed in the preset window, such that display content of the preset window and display content of the browser window are displayed together on a display screen.

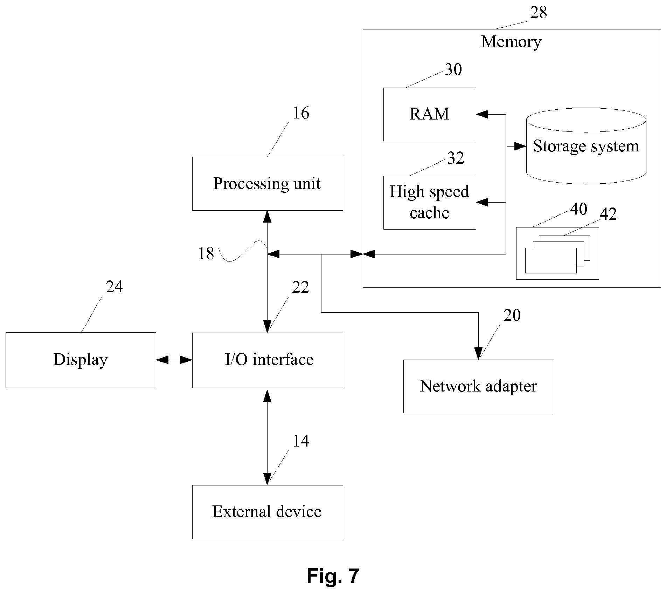

The embodiments of the present application provide, on the basis of the above embodiment, a browser page display terminal. The terminal may include the browser page display apparatus provided by the embodiment of the present application. Fig. 7 is a schematic structural diagram of a browser page display terminal according to an embodiment of the present application. Fig. 7 shows a block diagram of an exemplary terminal 12 suitable for implementing the implementation manners of the present application. The terminal 12 shown in Fig. 7 is merely an example, and should not impose any limitation on the function and scope of use of the embodiments of the present application.

As shown in Fig. 7, the terminal 12 is embodied in the form of a general purpose computing device. The components of the terminal 12 may include, but are not limited to, one or more processors or processing units 16, a memory or a system memory 28, and a bus 18 that connects different system components (including the system memory 28 and the processing units 16).

The bus 18 represents one or more of several types of bus structures, including a memory bus or a memory controller, a peripheral bus, a graphics acceleration port, a processor, or a local bus using any of a variety of bus structures. For example, these architectures include, but are not limited to, an Industry Standard Architecture (ISA) bus, a Micro Channel Architecture (MAC) bus, an enhanced ISA Bus, a Video Electronics Standards Association (VESA) local bus, and a Peripheral Component Interconnect (PCI) bus.

The terminal 12 typically includes a variety of computer system readable media. These media may be any available media that can be accessed by the terminal 12, including volatile and non-volatile media, removable and non-removable media.

The system memory 28 may include computer system readable media in the form of volatile memory, such as a Random Access Memory (RAM) 30 and/or a cache memory 32. The terminal 12 may further include other removable/non-removable, volatile/non-volatile computer system storage media. By way of example only, the storage system 34 may be used to read and write non-removable, non-volatile magnetic media (not shown in Fig. 6, commonly referred to as "hard disk drives"). Although not shown in Fig. 7, a disk drive for reading and writing a removable non-volatile disk (such as a "floppy disk"), and an optical disc drive for reading and writing a removable non-volatile optical disc (such as a CD-ROM, DVD-ROM or other optical media) may be provided. In these cases, each drive may be coupled to the bus 18 via one or more data medium interfaces. The memory 28 may include at least one program product having a set (e.g., at least one) of program modules configured to perform the functions of the various embodiments of the present application.

A program/utility 40 having a set (at least one) of program modules 42 may be stored, for example, in the memory 28, such program modules 42 including but not limited to an operating system, one or more applications, other program modules, and program data. An implementation of the network environment may be included in each or some of these examples. The program module 42 typically performs the functions and/or methods of the embodiments described herein.

The terminal 12 may also be in communication with one or more external devices 14 (e.g., a keyboard, a pointing device, a display 24, etc.), and may also be in communication with one or more devices that enable a user to interact with the terminal 12, and/or any device (e.g., a network card, a modem, etc.) that enables the terminal 12 to be in communication with one or more other computing devices. This communication may take place via an input/output (I/O) interface 22. Also, the device/terminal/terminal 12 may also communicate with one or more networks (e.g., a Local Area Network (LAN), a Wide Area Network (WAN), and/or a public network, such as the Internet) through a network adapter 20. As shown in the figures, the network adapter 20 communicates with other modules of the device/terminal 12 via the bus 18. It is to be understood that although not shown in the figures, other hardware and/or software modules may be utilized in connection with the terminal 12, including but not limited to: microcode, device drivers, redundant processing units, external disk drive arrays, RAID systems, tape drives, data backup storage systems, etc.

By running the program stored in the system memory 28, the processing unit 16 is configured to acquire a trigger instruction of a page setup event, and acquire a webpage address of a webpage corresponding to the page setup event;
close a tab page corresponding to the page setup event, wherein the tab page is displayed in a browser window; and
set parameters of a preset window and the browser window are set in a preset mode, and display page content corresponding to the webpage address in the preset window, such that display content of the preset window and display content of the browser window are displayed together on a display screen.

In an embodiment, before setting the parameters of the preset window and the browser window in the preset mode, the processing unit 16 is further configured to perform the operation as follows.

A preset window is popped up in response to a failure in detecting any opened preset window.

In an embodiment, when setting the parameters of the preset window and the browser window in the preset mode, the processing unit 16 is configured to perform the operations as follows.

A display width value of the display screen is acquired, and width values of the preset window and the browser window are set to be half of the display width value.

The preset window and the browser window are displayed side by side horizontally. In an embodiment, before setting the parameters of the preset window and the browser window in the preset mode, the processing unit 16 is further configured to perform the operation as follows.

A new preset window is popped up in response to detecting at least one opened preset window and a number of the at least one opened preset window is less than a preset number.

In an embodiment, when displaying the page content corresponding to the webpage address in the preset window, the processing unit 16 is further configured to perform the operation as follows.

In response to detecting opened preset windows and a number of the opened preset windows is equal to a preset number, page content corresponding to the webpage address is displayed in at least one of the opened preset windows.

In an embodiment, when setting the parameters of the preset window and the browser window in the preset mode, the processing unit 16 is configured to perform the operations as follows.

A size and a position of the preset window are set according to a preset distance value from a border of the preset window to a border of the display screen.

A size and a position of the browser window are set according to a preset distance value from a border of the browser window to a border of the display screen.

In an embodiment, when closing the tab page corresponding to the page setup event, the processing unit 16 is further configured to perform the operation as follows.

A tab page window processing function triggered by the trigger instruction of the page setup event is determined, a tab page closing instruction is generated according to the tab page window processing function, and a process of the tab page corresponding to the page setup event is closed according to the tab page closing instruction.

It is noted that the above are only the exemplary embodiments of the present application and the technical principles applied thereto. Those skilled in the art will appreciate that the present application is not limited to the specific embodiments described herein, and various obvious changes, re-adjustments and substitutions may be made by those skilled in the art without departing from the scope of protection of the present application. Therefore, the present application has been described in detail by the above embodiments, but the present application is not limited to the above embodiments, and more other equivalent embodiments may be included without departing from the concept of the present application. The scope of the present application is determined by the scope of the appended claims.

## Claims

1. A browser page display method, comprising:
acquiring a trigger instruction of a page setup event, and acquiring a webpage address of a webpage corresponding to the page setup event;
closing a tab page corresponding to the page setup event, wherein the tab page is displayed in a browser window; and
setting parameters of a preset window and the browser window in a preset mode, and displaying page content corresponding to the webpage address in the preset window, such that display content of the preset window and display content of the browser window are displayed together on a display screen.

2. The browser page display method as claimed in claim 1, wherein before setting the parameters of the preset window and the browser window in the preset mode, the browser page display method further comprises:
popping up, in response to a failure in detecting any opened preset window, a preset window.

3. The browser page display method as claimed in claim 2, wherein setting the parameters of the preset window and the browser window in the preset mode comprises:
acquiring a display width value of the display screen, and setting width values of the preset window and the browser window to be half of the display width value; and
displaying the preset window and the browser window side by side horizontally.

4. The browser page display method as claimed in claim 1, wherein before setting the parameters of the preset window and the browser window in the preset mode, the browser page display method further comprises:
popping up, in response to detecting at least one opened preset window and a number of the at least one opened preset window is less than a preset number, a new preset window.

5. The browser page display method as claimed in claim 1, wherein displaying the page content corresponding to the webpage address in the preset window comprises:
displaying, in response to detecting opened preset windows and a number of the opened preset windows is equal to a preset number, the page content corresponding to the webpage address in at least one of the opened preset windows.

6. The browser page display method as claimed in claim 1, wherein setting the parameters of the preset window and the browser window in the preset mode comprises:
setting a size and a position of the preset window according to a preset distance value from a border of the preset window to a border of the display screen; and
setting a size and a position of the browser window according to a preset distance value from a border of the browser window to a border of the display screen.

7. The browser page display method as claimed in claim 1, wherein closing the tab page corresponding to the page setup event comprises:
determining a tab page window processing function triggered by the trigger instruction of the page setup event, generating a tab page closing instruction according to the tab page window processing function, and closing a process of the tab page corresponding to the page setup event according to the tab page closing instruction.

8. The browser page display method as claimed in claim 1, wherein the browser page display method further comprises: acquiring a trigger instruction of a page recovery event, closing a preset window corresponding to the page recovery event, and displaying, in the browser window, the page content displayed in the closed preset window.

9. A browser page display apparatus, comprising:
a webpage address acquiring module, configured to acquire a trigger instruction of a page setup event, and acquire a webpage address of a webpage corresponding to the page setup event;
a tab page closing module, configured to close a tab page corresponding to the page setup event, wherein the tab page is displayed in a browser window; and
a preset window setting module, configured to set parameters of a preset window and the browser window in a preset mode, and display page content corresponding to the webpage address in the preset window, such that display content of the preset window and display content of the browser window are displayed together on a display screen.

10. The browser page display apparatus as claimed in claim 9, wherein the preset window setting module is further configured to:
pop up, in response to a failure in detecting any opened preset window, a preset window.

11. The browser page display apparatus as claimed in claim 10, wherein the preset window setting module is specifically configured to:
acquire a display width value of the display screen, and set the widths of the preset window and the browser window to be half of the display width value; and
display the preset window and the browser window side by side horizontally.

12. The browser page display apparatus as claimed in claim 9, wherein the preset window setting module is further configured to:
pop up, in response to detecting at least one opened preset window and a number of the at least one opened preset window is less than a preset number, a new preset window.

13. The browser page display apparatus as claimed in claim 9, wherein the preset window setting module is specifically configured to:
set a size and a position of the preset window according to a preset distance value from a border of the preset window to a border of the display screen; and
set a size and a position of the browser window according to a preset distance value from a border of the browser window to a border of the display screen.

14. The browser page display apparatus as claimed in claim 9, wherein the tab page closing module is specifically configured to:
determine a tab page window processing function triggered by the trigger instruction of the page setup event, generate a tab page closing instruction according to the tab page window processing function, and close a process of the tab page corresponding to the page setup event according to the tab page closing instruction.

15. The browser page display apparatus as claimed in claim 9, wherein the preset window setting module is further configured to acquire a trigger instruction of a page recovery event, close a preset window corresponding to the page recovery event, and display, in the browser window, the page content displayed in the closed preset window.

16. A storage medium, having a plurality of instructions stored therein, the instructions being adapted to be loaded by a processor to perform the browser page display method as claimed in any one of claims 1 to 8.

17. A browser page display terminal, comprising: a processor, a memory and a computer program that is stored on the memory and runnable on the processor, wherein the computer program is executed by the processor to implement the following operations:
acquiring a trigger instruction of a page setup event, and acquiring a webpage address of a webpage corresponding to the page setup event;
closing a tab page corresponding to the page setup event, wherein the tab page is displayed in a browser window; and
setting parameters of a preset window and the browser window in a preset mode, and displaying page content corresponding to the webpage address in the preset window, such that display content of the preset window and display content of the browser window are displayed together on a display screen.

18. The browser page display terminal as claimed in claim 17, wherein before setting the parameters of the preset window and the browser window in the preset mode, the processor is further configured to perform the following operations:
popping up, in response to a failure in detecting any opened preset window, a preset window.

19. The browser page display terminal as claimed in claim 18, wherein when setting the parameters of the preset window and the browser window in the preset mode, the processor is configured to perform the following operations:
acquiring a display width value of the display screen, and setting width values of the preset window and the browser window to be half of the display width value; and
display the preset window and the browser window side by side horizontally.

20. The browser page display terminal as claimed in claim 17, wherein before setting the parameters of the preset window and the browser window in the preset mode, the processor is further configured to perform the following operations:
popping up, in response to detecting at least one opened preset window and a number of the at least one opened preset window is less than a preset number, a new preset window.
